# EUROPÄISCHE PATENTSCHRIFT

(11) **EP 0 601 464 B1**
(45) Veröffentlichungstag und Bekanntmachung des Hinweises auf die Patenterteilung: **26.02.1997**
(21) Anmeldenummer: 93119381.7
(22) Anmeldetag: 01.12.1993
(51) Int. Cl.: H02G 15/18, H02G 15/013, B29C 61/06

(54) **Verfahren zum Herstellen eines dichten Abschlusses an den Enden einer schrumpfbaren Kabelmuffe und Abdichtelement hierfür**
Process for manufacturing a sealed closure at the ends of a shrinkable cable sleeve and sealing member therefor
Procédé de réalisation d'une fermeture étanche aux extrémités d'un manchon de câble rétractable et élément d'étanchéité pour celui-ci

(30) Priorität: 08.12.1992 DE 4241304
(43) Veröffentlichungstag der Anmeldung: 15.06.1994
(73) Patentinhaber: RXS Kabelgarnituren Gesellschaft mit beschränkter Haftung, D-58093 Hagen (DE)
(72) Erfinder: Meltsch, Hans-Jürgen, Dipl.-Ing., D-58239 Schwerte (DE); Schulte, Wolfgang, Dipl.-Ing., D-58099 Hagen (DE)
(74) Vertreter: Fuchs, Franz-Josef, Dr.-Ing.

(56) Entgegenhaltungen:
- DE-A- 2 413 623
- DE-A- 3 204 866
- DE-A- 3 728 638
- DE-A- 3 815 027
- DE-U- 8 414 101
- GB-A- 2 195 840
- US-A- 4 400 579

## Beschreibung

Die Erfindung betrifft ein Verfahren zum Herstellen eines dichten Abschlusses bei einem mindestens zwei Kabel enthaltenden Einführungsbereich einer Kabelmuffe, deren Muffenwandung zumindest im Einführungsbereich schrumpfbar ist, mit Hilfe eines zwischen den Kabeln eingeführten und zumindest teilweise aus wärmeverformbarem Material bestehenden Dichtungsteils eines Abdichtelementes, wobei das Abdichtelement zwischen den Kabeln mit Fixierteilen des Abdichtelementes an einer Muffenwandung der Kabelmuffe einseitig fixiert wird und auf den Bereich des Abschlusses und das Abdichtelement solange Wärme zugeführt wird bis das wärmeverformbare Dichtungsteil des Abdichtelementes dichtend verformt ist, wobei weiterhin die Kabelmuffe mit ihrem schrumpfbaren Bereich lose um den Einführungsbereich herumgewickelt wird und das Abdichtelement mit seinem Dichtungsteil zwischen die eingeführten Kabel eingeführt wird.

Aus der DE-PS 29 00 518 ist ein Verfahren zum Bilden einer dichten Verbindung zwischen einer wärmegeschrumpften Muffe und wenigstens zwei längsgestreckten Substraten bekannt, wobei im Eintrittsbereich der Substrate in die Muffe die Muffe zwischen den Substraten an deren Oberflächen weitgehend anliegt. Dies bedeutet, daß eine Anpreßvorrichtung in dem Eintrittsbereich der Hülse vorgesehen werden muß, um im Bereich zwischen den Substraten das Anliegen der Muffe ermöglichen zu können. Dies erfolgt mit Hilfe einer Klammer, durch welche Kanäle für das Aufnehmen der Substrate gebildet werden. Dabei liegen jeweils Schenkel der Klammer auf den Außenseiten der einander zugeordneten Abschnitte der Hülse, wodurch gewissermaßen Einschnürungen der Hülse zwischen den Substraten erzeugt werden. Bei diesen Einschnürungen zwischen den Substraten können unter Umständen Probleme während des Schrumpfens auftreten, wenn ungleichmäßig Wärme zugeführt wird, insbesondere zum Beispiel bei Substraten mit sehr unterschiedlichen Durchmessern. Weiterhin sind zum Abdichten von Zwickelbereichen bei Kabelmuffen auch angepaßte, X-förmige Abschlußstücke aus der DE-PS 24 13 623 bekannt, mit denen in den Zwickelbereichen zwischen den Kabeln die Abdichtungen vorgenommen werden. Hier werden ebenfalls Anpreßvorrichtungen benötigt, mit denen die Umhüllung auf die dazwischenliegenden Abschlußstücke wellenförmig aufgepreßt werden, so daß auch hier in jedem Zwickelbereich eine Art Einschnürung entsteht. Die Anpreßvorrichtungen besitzen wiederum Schenkel, die auf den sich gegenüber liegenden Außenseiten in den durch die Abschlußstücke gebildeten Tälern der Umhüllung liegen und somit die Umhüllung je nach Abschlußstück wellenförmig zusammenpressen. Außerdem werden diese Anpreßvorrichtungen nach dem Schrumpfen durch U-förmige Klammern ersetzt, die ebenfalls auf den Außenseiten der Umhüllung liegen und diese in der Lage sichern.

Bei dem Gebrauchsmuster DE-U-84 13 101 handelt es sich um eine schrumpfbare Kabelmuffe mit mehreren Kabelauslässen an der Stirnseite. Zur Abdichtung der Zwickelbereiche werden jeweils zwei Dichtungsformteile aus je einer U-förmigen Klammer gegenüberliegend angeordnet. Diese U-förmigen Klammern werden auf die sich gegenüberliegenden Wandungen der Kabelmuffe aufgeschoben, wobei der innen liegende Schenkel zumindest teilweise aus einem Heißschmelzkleber besteht. Dabei ist erkennbar, daß die Zwickelbereiche im Bereich der aufgeschobenen Klammern gegeneinander gedrückt werden, so daß sich eine wellenförmige Struktur der Kabelmuffe ausbildet. Dies setzt voraus, daß die Klammerbereiche vor und während des Schrumpfvorganges zusammengehalten werden müssen, um zu einer derartigen Konstellation zu kommen.

In der Entgegenhaltung GB-A-2 195 840 besteht das für die Abdichtung von Zwickelbereichen an den Stirnseiten einer Kabelmuffe verwendete Füllstück aus einem Material, das bei Wärmeeinwirkung schmilzt und die Hohlräume ausfüllt. Dieses Füllstück besitzt zwei axial gerichtete, zylindrische Aussparungen oder Kanäle, in denen die einzuführenden Kabel festsitzend vom warmschmelzbaren Material umschlossen werden. Hierfür ist jedoch erforderlich, daß die Durchmesser der Aussparungen oder Kanäle den Außendurchmessern der jeweils eingeführten Kabel angepaßt sein müssen, das heißt es müssen jeweils entsprechend angepaßte Typen von Füllstücken bereitgestellt werden. Da meist die durchzuführenden Kabel verschiedene Außendurchmesser aufweisen, müssen auch Füllstücke mit verschiedenen Aussparungs- bzw. Kanaldurchmessern vorgesehen werden. Bei derartigen Ausführungen wird somit das aus heiß verformbarem Material bestehende Füllstück direkt formschlüssig auf den Kabeln fixiert, wobei entsprechende Formanpassungen vorausgesetzt sind. Für die Wärmezufuhr in die inneren Bereiche des Füllstückes ist ein gut wärmeleitfähiges Element vorgesehen, das sich vom Inneren des warmschmelzenden Füllstückes bis außerhalb der Muffe erstreckt, wobei es in den Bereich der größten Wärmezufuhr für das Schrumpfen der Muffe hingeführt ist. Eine Auflage auf der Muffenwandung findet nicht statt; dieses Element dient ausschließlich der Wärmeleitung im inneren Bereich des Füllstückes.

Die der Erfindung zugrunde liegende Aufgabe besteht nun darin, ein Verfahren zum Herstellen eines dichten Abschlusses bei Kabelmuffen mit mehr als einer Kabeleinführung pro Einführungsbereich zu schaffen, bei dem der jeweilige Einführungsbereich mit Einsatz von einfachen Abdichtelementen in übersichtlicher, möglichst glatter und unproblematischer Formgebung ausgeführt werden kann, wobei das hierfür benötigte Abdichtelement wie auch der damit hergestellte Abschluß Inhalt der Aufgabe ist.

Diese gestellte Aufgabe wird nun mit einem ersten Verfahren der eingangs erläuterten Art dadurch gelöst, daß die gegenüberliegenden Muffenwandungen der Kabelmuffe im Zwickelbereich zwischen den eingeführten Kabeln bis zum tangentialen Verlauf zwischen den Kabeln geschrumpft wird, wobei das bei Wärmezufuhr verformbare Dichtungsteil in der Menge so bemessen ist, daß es den Zwickelbereich zwischen den Kabeln und den tangential verlaufenden Muffenwandungen der Kabelmuffe dichtend ausfüllt.

Die gestellte Aufgabe wird jedoch auch nach einem zweiten Verfahren der eingangs erläuterten Art dadurch gelöst, daß das Abdichtelement zwischen den Kabeln mit einem äußeren Fixierteil des Abdichtelementes an mindestens einem eingeführten Kabel fixiert wird, und daß das Dichtungsteil so verformt wird, daß es den Zwickelbereich zwischen den eingeführten Kabeln und den sich gegenüberliegenden, maximal bis zum tangentialen Verlauf zwischen den Kabeln geschrumpften Muffenwandungen der Kabelmuffe dichtend ausfüllt.

Die gestellte Aufgabe wird weiterhin durch die Schaffung eines Abdichtelementes für das erstgenannte Verfahren dadurch gelöst, daß das auf dem inneren Fixierteil angeordnete und aus bei Wärmezufuhr verformbarem Material bestehende Dichtungsteil in der Menge so bemessen ist, daß damit der Zwickelbereich zwischen den Kabeln und den maximal tangential zwischen den Kabeln verlaufenden Muffenwandungen dichtend ausgefüllt ist.

Für die Durchführung des zweiten Verfahrens wird weiterhin gemäß der Aufgabe ein Abdichtelement geschaffen, das dadurch gekennzeichnet ist, daß es auf die Kabelmuffe bezogen ein inneres Fixierteil und ein äußeres Fixierteil aufweist, daß das innere Fixierteil und das äußere Fixierteil in Einführungsrichtung hintereinanderliegend verbunden sind, daß das äußere Fixierteil zumindest an einem der eingeführten Kabel mit Fixiermitteln fixierbar ist und daß das innere Fixierteil das Dichtungsteil aus bei Wärmezufuhr verformbarem Material aufweist und daß die Menge des verformbaren Materials des Dichtungsteiles so bemessen ist, daß es den Zwickelbereich zwischen den Kabeln und dem tangentialen Verlauf der Muffenwandungen zwischen den Kabeln dichtend ausfüllt.

Schließlich wird die gestellte Aufgabe ergänzend durch einen Abschluß im Einführungsbereich, der nach einem der Verfahren unter Verwendung eines entsprechenden Abdichtelementes hergestellt ist, dadurch gelöst, daß dieser durch Umformung des im Abdichtelement enthaltenen Dichtungsteils aus bei Wärme verformbarem Material während des Schrumpfvorganges gebildet ist, wobei der Verlauf der Muffenwandungen der Kabelmuffe im Zwickelbereich zwischen zwei Kabeln jeweils maximal tangential ist und daß Fixierteile des Abdichtelementes an einer der Muffenwandungen im Einführungsbereich und/oder an mindestens einem der eingeführten Kabel angeordnet sind.

Die Erfindung zielt darauf hin, daß in den Einführungsbereichen von Kabelmuffen mit mehreren Kabeleinführungen durch möglichst einfache Formgebung die im Stand der Technik aufgezeigten Profilierungen, Einschnürungen und dergleichen vermieden werden, wodurch sich der Einführungsbereich jeweils erheblich sicherer gestalten läßt. So wird gemäß der Erfindung für den Einführungsbereich mit mehreren Kabeln einer Kabelmuffe keine Bildung von Kanälen, Wellen oder Falten mehr erzwungen, da diese bei unvorsichtiger Wärmebehandlung zu Unregelmäßigkeiten führen könnten. Bei den Einführungsbereichen gemäß der Erfindung wird deshalb die Kabelmuffe zwischen den eingeführten Kabeln nicht mehr zusammengezogen, sondern sie wird maximal nurmehr bis zum tangentialen Verlauf zwischen den Kabeln geschrumpft. Anders ausgedrückt, daß die Muffenwandung zwischen zwei Kabeln jeweils den Verlauf einer gemeinsamen Tangente bildet, so daß am Ende des Schrumpfvorganges keine Einformungen der Kabelmuffenwandungen nach einwärts gebildet sind, da sie weder nach einwärts gezogen worden sind, noch von außen zusammengepreßt werden. Für die Abdichtung des Zwickelbereiches zwischen den Kabeln und dem jeweils tangentialen Verlauf der Muffenwandung wird ein Abdichtelement verwendet, das aus einem Abdichtteil und einem Fixierteil besteht. Das Abdichtteil besteht zumindest teilweise aus einem schmelzbaren Material, zum Beispiel aus einem an sich bekannten Schmelzkleber, das bei Wärmezufuhr, die auch das Schrumpfen der Kabelmuffe bewirkt, so verformbar wird, daß das Material schmilzt und durch Umformung den Zwickelbereich dichtend ausfüllt. Die Verformung erfolgt dabei durch die schrumpfende Kabelmuffe, die maximal bis zum tangentialen Verlauf ihrer Wandungen zwischen den Kabeln straff geschrumpft wird. Das Abdichtteil des Abdichtelementes wird zwischen den Kabeln in geeigneter Weise fixiert ohne daß die schrumpfende Kabelmuffe durch das Abdichtelement vorgeformt wird. Das Abdichtteil ist mit einem entsprechend gestalteten Fixierteil verbunden, das entweder einseitig auf ein Wandungsteil der Kabelmuffe zwischen den Kabeln aufgesteckt wird oder zumindest an einem der eingeführten Kabel befestigt wird. Dadurch ist die prinzipielle Lage des Abdichtelementes vorgegeben ohne daß dabei eine Verformung der noch ungeschrumpften Kabelmuffe stattfindet.

Die Länge der inneren Fixier- bzw. Dichtungsteile ist jeweils optimal, wenn sie annähernd dem Durchmesser eines eingeführten Kabels entspricht; jedoch sind durch die Möglichkeit des stirnseitigen Austritts von überschüssigem Material Abweichungen bis 50 % durchaus vertretbar.

Bei einem Ausführungsbeispiel eines erfindungsgemäßen Abdichtelementes kann z.B. zumindest das innere Fixierteil aus einem Bimetall-Formstück bestehen, durch welches bei Warmeeinwirkung eine gewünschte Formänderung eintritt.

Das innere Fixierteil kann auch mit einer Anzeigevorrichtung für Temperatur versehen werden, so daß damit der Zeitpunkt für die Beendigung der Wärmezufuhr erkennbar wird.

Die entsprechenden Einzelheiten der Erfindung werden nun anhand von zweiunddreißig Figuren näher erläutert.
- Figur 1: zeigt die Position eines Abdichtelementes gemäß der Erfindung vor der Schrumpfung der Kabelmuffe.
- Figur 2: zeigt den geschrumpften Zustand der Kabelmuffe.
- Figur 3: zeigt den in Figur 1 angegebenen Schnitt.
- Figur 4: zeigt den in Figur 2 angegebenen Schnitt.
- Figur 5: zeigt eine Dreifacheinführung in eine Kabelmuffe.
- Figur 6: zeigt eine Vierfacheinführung mit Hilfe von zwei verschiedenen Abdichtelementen.
- Figur 7: zeigt eine Vierfacheinführung mit vier gleichen Abdichtelementen.
- Figur 8: zeigt die Kabeleinführung mit Kabeln verschiedener Durchmesser.
- Figur 9: zeigt ein starres Abdichtelement.
- Figur 10: zeigt eine Dreifacheinführung mit einem abgewinkelten Abdichtelement.
- Figur 11: zeigt zwei parallel eingeführte Abdichtelemente im Einführungsbereich.
- Figur 12: zeigt ein Abdichtelement mit einem äußeren dreifingerigen Fixierteil.
- Figur 13: zeigt ein Abdichtelement mit einem teleskopartig verschiebbaren Dichtungsteil vor der Schrumpfung.
- Figur 14: zeigt das in Figur 13 angegebene Ausführungsbeispiel im Endzustand.
- Figur 15: zeigt ein Ausführungsbeispiel, bei dem ein Spreizteil vorgesehen ist, im Montagezustand.
- Figur 16: zeigt das in Figur 15 angegebene Ausführungsbeispiel im Endzustand.
- Figur 17: zeigt ein Ausführungsbeispiel mit zwei Abdichtelementen, die beweglich über einen Steg verbunden sind.
- Figur 18: zeigt das in Figur 17 verwendete Abdichtelement.
- Figur 19: zeigt zwei Abdichtelemente, die über ein Gelenk miteinander verbunden sind.
- Figur 20: zeigt ein Abdichtelement nach Figur 9, bei dem zusätzlich ein bewegliches Dichtungsteil angeordnet ist.
- Figur 21: zeigt ein Abdichtelement, bei dem das Dichtungsteil spreizbar ist.
- Figur 22: zeigt ein weiteres Ausführungsbeispiel für ein Abdichtelement mit einem zusätzlichen beweglichen Dichtungsteil.
- Figur 23: zeigt ebenfalls ein Ausführungsbeispiel mit einem zusätzlichen beweglichen Dichtungsteil.
- Figur 24: zeigt ein Abdichtelement in der Form einer Sieben.
- Figur 25: zeigt ein S-förmiges Abdichtelement.
- Figur 26: zeigt zwei gegeneinander gestellte Abdichtelemente mit dreieckförmigen Dichtungsteilen.
- Figur 27: zeigt ein weiteres Ausführungsbeispiel für Abdichtelemente mit dreieckförmigen Dichtungsteilen.
- Figur 28: zeigt ein Abdichtelement, bei dem das Dichtungsteil einen federartigen Ansatz aufweist.
- Figur 29: zeigt ein Ausführungsbeispiel, bei dem das Dichtungsteil des Abdichtelementes mit Fixiermitteln an den eingeführten Kabeln fixiert ist.
- Figur 30: zeigt, stellvertretend für alle anderen Möglichkeiten, daß das Abdichtelement nach Figur 29 ebenfalls mit den vorher bereits erläuterten Zusätzen ausgestattet werden kann.
- Figur 31: zeigt ein Abdichtelement nach Figur 29 mit zwei beweglichen Dichtungsteilen.
- Figur 32: zeigt die Kombination eines Abdichtelementes nach Figur 1 mit einem nach Figur 29.
- Figur 33: zeigt ein Abdichtelement mit Ausformungen am inneren Fixierteil.

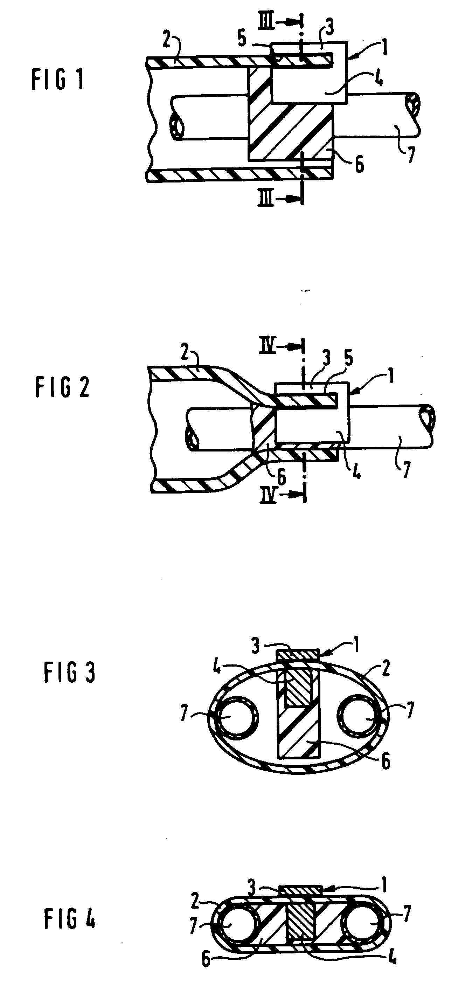

Figur 1 zeigt den Einsatz eines erfindungsgemäßen Abdichtelementes 1, welches nach dem Verfahren gemäß der Erfindung in den Einführungsbereich einer Kabelmuffe 2 zum Herstellen eines dichten Abschlusses eingeführt wird. Das Abdichtelement 1 besteht aus einem wärmeleitenden Fixierteil 3-4 und einem Dichtungsteil 6, wobei das Dichtungsteil 6 vorzugsweise aus einem schmelzbaren Material wie zum Beispiel aus einem Heißschmelzkleber besteht. Das Fixierteil 3-4 hingegen besteht aus wärmefestem Material, vorzugsweise aus Metall. Das Fixierteil 3-4 hat im einfachsten Fall U-förmige, spangenartige Gestalt und enthält einen in Längsrichtung verlaufenden Schlitz 5, dessen Spaltbreite der Größenordnung einer Wanddicke der Kabelmuffe 1 entspricht. Dieses spangenartige Fixierteil 3-4 wird nun nach Einführung von mindestens zwei Kabeln 7 zwischen den Kabeln 7 in dem zusammen mit der Kabelmuffe 1 gebildeten Zwickelbereich eingeführt, wobei in den Schlitz 5 des Fixierteiles 3-4 eine Wandung der Kabelmuffe 1 bis zum Anschlag eingesteckt wird. Dadurch ist der Einführungsbereich noch völlig lose, irgendwelche Formungsmaßnahmen, wie Einschnürungen oder Zusammenfalten oder Fixieren der Muffenwandungen sind dabei nicht nötig. Dieser Zustand ist in Figur 1 dargestellt. Aus dieser Figur ist noch erkennbar, daß das innen liegende Fixierteil 4 des Fixierteiles 3-4 gleichzeitig der Träger für das Dichtungsteil 6 ist. Dieses Dichtungsteil 6 ist von der Menge des schmelzaren Materials her so bemessen, daß damit mindestens der Zwickelbereich zwischen den Kabeln 7 und den maximal tangential zwischen den Kabeln 7 verlaufenden Muffenwandungen dichtend ausgefüllt ist. Dieser maximal tangentiale Verlauf der Muffenwandungen der Kabelmuffe 1 im Zwickelbereich bildet sich beim Schrumpfen selbst aus, wenn nicht dafür gesorgt ist, daß stirnseitiges Austreten des geschmolzenen Dichtungsteiles 6 verhindert wird. Ansonsten wird das Dichtungsteil 6 so verformt, bis der Zwickelbereich vollständig dicht ausgeformt ist. Dabei ist dann auch stirnseitiges Austreten von überflüssigem Material des Dichtungsteiles 6 möglich. Auf diese Weise sind im Einführungsbereich keine Klemmelemente oder Klammerwerkstücke nötig, welche die Kabelmuffe 2 zumindest während des Schrumpfvorganges zwischen den Kabeln 7 einschnüren bzw. zusammenpressen. Die Kabelmuffe 2 zeigt eine glatte, gleichmäßige Oberfläche, wo daß also in diesem Einführungsbereich keine Verwerfungen oder Unregelmäßigkeiten auftreten können, die zu Schwierigkeiten bezüglich der Dichtigkeit führen könnten.

Figur 2 zeigt die Anordnung nach Figur 1 nach dem Schrumpfvorgang. Daraus ist zu erkennen, daß das Dichtungsteil 6 umgeformt worden ist und daß dadurch im gesamten Zwickelbereich zwischen den Kabeln 7 und den Muffenwandungen der Kabelmuffe 2 ein dichter Abschluß im Einführungsbereich geschaffen worden ist. Das Fixierteil 3-4 des Dichtungselementes 1 bleibt dabei unverändert und die Wandungen der Kabelmuffe 2 sind bis zum tangentialen Verlauf zwischen den Kabeln 7 auf die Kabelmäntel geschrumpft.

Die Figur 3 zeigt den Einführungsbereich der Kabelmuffe 2 im geschrumpften Zustand im Bereich des in Figur 1 angedeuteten Schnittes III-III, wobei die Kabelmuffe 2 noch lose um die eingeführten Kabel 7 herumgelegt ist. Es kann sich dabei um eine rohrförmige Kabelmuffe oder auch um eine Kabelmanschette mit einem Längsverschluß (hier nicht dargestellt) aus schrumpfbarem Material handeln. Es ist erkennbar, daß das Abdichtelement 1 mit seinem Fixierteil 3-4 nur auf eine Muffenwandung der Kabelmuffe 2 aufgeschoben ist, wobei das äußere Fixierteil 3 auf der Außenseite und das innere Fixierteil 4 des Abdichtelementes auf der Innenseite der Kabelmuffe 2 anliegen. Das innere Fixierteil 4 ist vom eigentlichen Dichtungsteil 6 aus schmelzbarem Material umgeben.

In Figur 4 ist der in Figur 2 angedeutete Schnitt IV-IV dargestellt, woraus hervorgeht, daß die Muffenwandungen der Kabelmuffe 2 maximal bis zum tangentialen Verlauf zwischen den eingeschlossenen Kabeln 7 geschrumpft sind. Der Zwickelbereich ist völlig ausgefüllt mit dem verformten Dichtungsteil 6 und bildet den dichten Abschluß im Einführungsbereich zwischen den eingeführten Kabeln 7 und den tangential verlaufenden Muffenwandungen der Kabelmuffe 2. Eine Einsenkung, Einschnürung oder wellenförmige Einbiegungen der Muffenwandteile der Kabelmuffe 2 zwischen den Kabeln 7 im Zwickelbereich ist nicht erfolgt, so daß bei diesem Einführungsbereich die Gefahr von gefährdeten Deformationen nicht mehr gegeben ist.

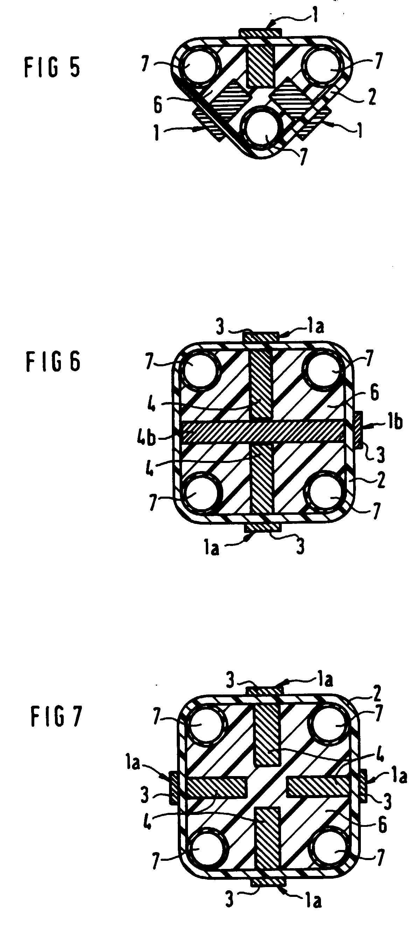

Die Figur 5 zeigt einen bereits nach dem erfindungsgemäßen Verfahren und mit drei Abdichtelementen 1 nach der Erfindung ausgebildeten dichten Abschluß einer Kabelmuffe 2 mit drei eingeführten Kabeln 7. Die eingeführten Kabel sind in dreieckförmiger Position angeordnet und dazwischenliegend sind die drei Abdichtelemente 1 eingesetzt, deren Dichtungsteile 6 zu einem einzigen dichten Abschluß zusammengeschmolzen sind. Auch hier ist der Verlauf der Kabelwandungen der Kabelmuffe 2 zwischen den einzelnen Kabeln 7 jeweils maximal tangential. Einbuchtungen oder wellenförmig eingezogener Verlauf der Kabelmuffenwandungen sind ebenfalls nicht gegeben, da ein Zusammenziehen durch die Abdichtelemente nicht erfolgt. Eine Dreifach- oder Mehrfacheinführung von Kabeln kann jedoch auch durch parallel eingeführte Kabel 7 hergestellt werden, wobei dann jeweils zwischen zwei benachbarten Kabeln 7 ein Abdichtelement 1 eingesetzt werden muß.

In Figur 6 wird eine Vierfach-Einführung von Kabeln 7 gezeigt, bei der die Kabel 7 in den Ecken einer Viereckform angeordnet sind. Der sich ergebende Zwischenraum wird mit Hilfe von einem langen und zwei kurzen Abdichtelementen in der bereits beschriebenen Weise vorbereitet, wobei sich das lange Abdichtelement 1b mit seinem inneren Fixierteil 4b quer durch den Zwischenraum erstreckt. Die Dichtungsteile der beiden kurzen Abdichtelemente 1a bilden zusammen mit jeweils einer Hälfte des Dichtungsteils 6 des langen Abdichtelementes 1b den dichten Abschluß in jedem der beiden Halbräume. Auch hier ist wiederum der Verlauf der geschrumpften Muffenwandungen zwischen jeweils zwei Kabeln 7 maximal tangential.

Die Figur 7 zeigt, daß eine Vierfacheinführung von Kabeln 7 auch mit vier gleichen Abdichtelementen 1a gebildet werden kann, wobei die nach innen gerichteten Fixierteile 4 der Abdichtelemente 1a sich jeweils nicht ganz bis zur Mitte des dichten Abschlusses erstrecken. Die Dichtungsteile 6 werden beim Schrumpfen so verformt, daß der gesamte Zwickelbereich dichtend ausgefüllt wird. Bei diesem wie auch beim vorhergehenden Ausführungsbeispiel ist angedeutet, daß das außen auf der Muffenwandung der Kabelmuffe 2 aufliegende Fixierteil 3 jeweils breiter ausgebildet ist als das innen liegende Fixierteil 4, wodurch die Aufnahme und damit auch die Zuführung von Wärme ins Innere begünstigt wird.

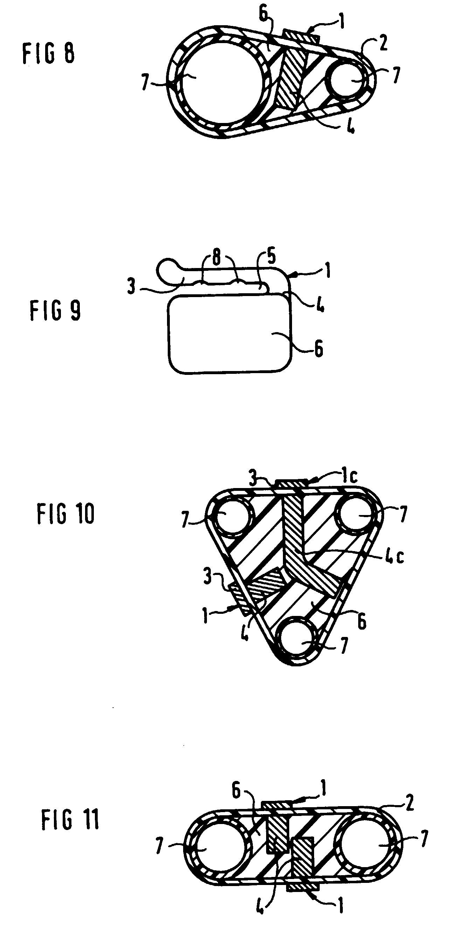

Figur 8 verdeutlicht die Anordnung der Kabel 7 bei einer Kabeleinführung, wenn die Durchmesser der Kabel 7 unterschiedlich sind. Dadurch ergibt sich zwangsläufig im Einführungsbereich der Kabelmuffe 2 die dargestellte schräg abfallende Form der Muffenwandungen der Kabelmuffe 2, wobei sich jedoch auch hier wiederum maximal ein tangentialer Verlauf der Kabelmuffenwandungen zwischen den einzelnen Kabeln 7 einstellt. Das Abdichtelement 1, das auch hier wieder nur an einer Muffenwandung fixiert ist, ragt mit seinem inneren Fixierteil 4 wieder ins Innere des Zwickelbereiches, wobei das Dichtungsteil 6 bereits zum dichten Abschluß umgeformt worden ist.

Figur 9 zeigt ein typisches Ausführungsbeispiel für ein Abdichtelement 1 gemäß der Erfindung. Das äußere Fixierteil 3 ist an seinem freien Ende aufgebogen, so daß es besser auf die Muffenwandung aufgeschoben werden kann. Außerdem sind zwei Einkerbungen bzw. Querrillungen 8 erkennbar, die ein Abgleiten des Abdichtelementes 1 verhindern. Außerdem entsteht dadurch, daß in diesen Einkerbungsbereichen weniger Druck ausgeübt wird, jeweils eine dickere Schicht Schmelzkleber, gewissermaßen als Kleberreservoir, auf der Innenseite der Muffenwandung. Dies bildet in den vom Druck des Abdichtelementes ausgedünnten Kleberbereichen eine bessere Abdichtsperre. Das innere Fixierteil 4 des Abdichtelementes 1 ist mit dem eigentlichen Dichtungsteil 6 in Form eines bei Wärmezufuhr schmelzbaren Dichtungsmittels versehen.

In Figur 10 wird eine weitere Variante für eine Dreifacheinführung von Kabeln 7 gezeigt. Hier wird ein normales Abdichtelement 1a mit einem kurzen inneren Fixierteil 4 benutzt, das bis etwa zur Mitte des Abschlusses reicht. Das Fixierteil 4c des zweiten Abdichtelementes 1c ist länger ausgebildet und abgewinkelt. Es wird so eingeführt, daß hierdurch eine Verteilung von Dichtungsmaterial 6 in zwei Zwickelbereichen erfolgen kann. Die äußeren Fixierteile 3 sind wiederum verdickt und zum Beispiel abgerundet, wodurch Verletzungen vermieden werden.

In Figur 11 wird schematisch verdeutlicht, daß im Bedarfsfall auch mehr als ein Abdichtelement 1 im Zwickelbereich zwischen den Kabeln 7 und den Muffenwandungen eingesetzt werden kann, wobei dann zweckmäßigerweise, aber nicht zwingend, an einer Muffenwandung jeweils nur ein Abdichtelement 1 aufgeschoben wird. Auch hier ergibt sich dann wiederum der maximal tangentiale Verlauf der Muffenwandungen der Kabelmuffe 2 zwischen den Kabeln 7 nach dem Schrumpfvorgang, da auch hier durch die Abdichtelemente 1 kein Zusammenziehen der Muffenwandungen erfolgt. Eine derartige Anordnung ist zum Beispiel zweckmäßig, wenn die Kabel 7 in größerer Entfernung voneinander liegen und wenn eventuell das Dichtungsteil 6 eines einzigen Abdichtelementes 1 dann zu knapp bemessen sein könnte.

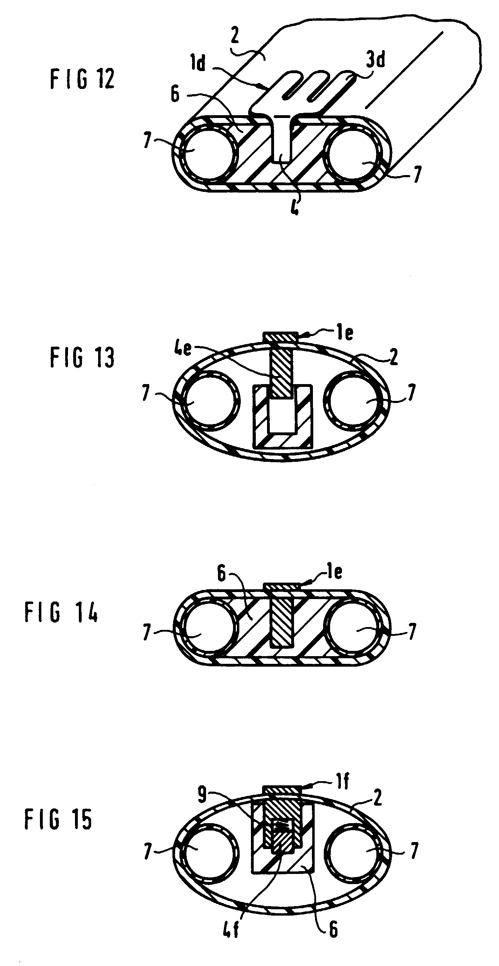

Die Figur 12 deutet an, daß das außen liegende Fixierteil 3d des Abdichtelementes 1d in mehrfingeriger Form ausgebildet sein kann. Dadurch erhöht sich die Stabilität der Fixierung und außerdem wird die eingeklemmte Muffenwandung beim Schrumpfen gleichmäßiger erwärmt.

Figur 13 zeigt ein Abdichtelement 1e, dessen inneres Fixierteil 4e verstellbar ist, so daß es in seiner Tiefenausdehnung der Höhe des Zwickelbereiches anpaßbar ist. Hier ist zum Beispiel eine teleskopartige Ausführung gewählt, dessen inneres Fixierteil 1e zunächst sehr lang ist, das heißt es kann zum Beispiel so sein, daß die Kabelmuffenwandungen der Kabelmuffe 2 im Zwickelbereich gespreizt sind. Bei Einwirkung von Wärme löst sich die Arretierung des teleskopartigen Aufbaus und das innere Fixierteil 1e wird insgesamt kürzer und preßt sich somit der endgültigen Weite des Zwickelbereiches besonders gut an. Das bewegliche Teleskopteil trägt auch das Dichtungsteil 6 in Form eines bei Wärmezufuhr umformbaren Materials.

Figur 14 zeigt den Endzustand des Ausführungsbeispiels nach Figur 13. Mit dem teleskopartig aufgebauten Abdichtelement 1e ergibt sich wiederum ein maximal tangentialer Verlauf der Kabelmuffe 2 zwischen den Kabeln 7 im Einführungsbereich der Kabelmuffe 2, wobei das umgeformte Dichtungsteil 6 den Zwickelbereich dichtend ausfüllt.

In Figur 15 wird ein weiteres Ausführungsbeispiel eines Abdichtelementes 1f mit einem sich bei Wärmezufuhr veränderlichen, inneren Fixierteil 1f dargestellt. Hier wird im inneren Fixierteil 1f ein Druckfederelement 9 eingesetzt, welches zum Beispiel bei Lieferung in zusammengedrücktem Zustand gehalten wird. Bei Wärmezufuhr wird die Arretierung, zum Beispiel ein Heißschmelzkleber, gelöst und das innere Fixierteil 4f spreizt sich aufgrund der Federkraft des Druckfederelementes 9 auf. Dies trägt zusätzlich zur Verteilung des geschmolzenen Dichtungsteils 6 im Zwickelbereich bei.

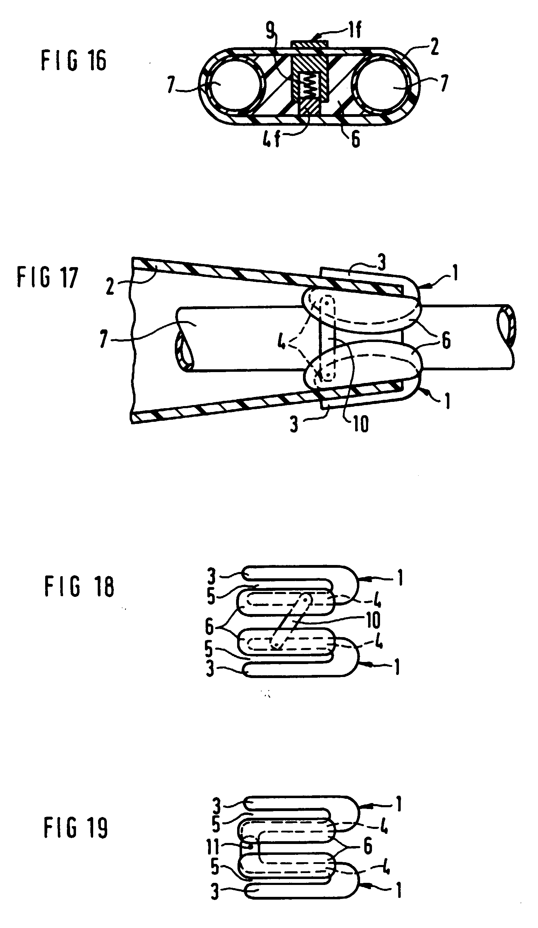

Die Figur 16 zeigt den Zustand des Abschlusses nach Figur 15 nach dem Schrumpfvorgang. Das bewegliche Fixierteil 4f ist durch das Druckfederelement 9 während des Schrumpfvorganges nach auswärts getrieben worden und verdrängt durch sein Volumen das entsprechende Dichtungsmaterial im Zwickelbereich und trägt somit zur besseren Verteilung bei.

Figur 17 zeigt ein Ausführungsbeispiel für den Abschluß eines Einführungsbereiches einer Kabelmuffe 2, bei dem zwei Abdichtelemente 1 der vorher beschriebenen Art über einen gemeinsamen Steg 10 voneinander unabhängig beweglich sind. Dieser Steg 10 ist bei der Montage dieser Kombination im Inneren des Zwickelbereiches und läßt zu, daß sich die Lage der beiden auf die Muffenwandung der Kabelmuffe 2 aufgeschobenen Abdichtelemente 1 fast unabhängig voneinander verstellen läßt. Dies erleichtert die Montage, besonders dann, wenn die Kabelmuffe 2 konisch zuläuft, wie es die Figur zeigt. Auf diese Weise kommen die äußeren Fixierteile 3 der Abdichtelemente 1 auf den Außen-seiten der gegenüber liegenden Muffenwandungen zu liegen, wobei auch hier durch die Beweglichkeit der Abdichtelemente 2 ein maximal tangentialer Verlauf der Muffenwandungen im Zwickelbereich zustande kommt. Die inneren Fixierteile 4 tragen jeweils die Dichtungsteile 6 aus schmelzbarem Material in ausreichender Menge.

Figur 18 zeigt ein aus zwei Abdichtelementen 1 bestehendes Abdichtelement wie es bei dem Ausführungsbeispiel nach Figur 17 eingesetzt ist. Diese beiden Dichtelemente 1 sind über einen Steg 10 beweglich miteinander verbunden. Die inneren Fixierteile 4 sind jeweils mit den Dichtungsteilen 6 aus bei Wärme verformbarem Material versehen. Bei der Montage liegen die äußeren Fixierteile 3 außerhalb des dichten Abschlusses auf den Kabelmuffenwandungen auf, ohne daß sich Einbuchtungen oder nach innen gerichtete Verformungen ergeben.

Figur 19 zeigt ebenfalls ein Ausführungsbeispiel eines kombinierten Abdichtelementes mit zwei beweglich zueinander gehaltenen einzelnen Abdichtelementen 1. Hier sind die beiden Abdichtelemente 1 über ein Gelenk miteinander verbunden. Die inneren Fixierteile 4 sind mit den Dichtungsteilen 6 aus verformbarem Material versehen.

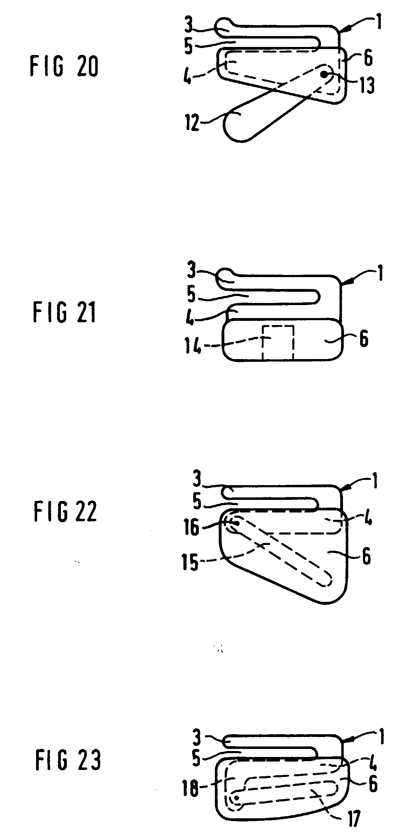

Figur 20 zeigt eine weitere Variante mit einem zusätzlichen, beweglichen Fixier- und Dichtungsteil 12, das über ein Gelenk 13 im inneren Fixierteil 4 des Abdichtelementes 1 beweglich angeordnet ist. Diese Anordnung hat den Vorteil, daß sich die Gesamtweite der Dichtungsteile 6 und 12 entsprechend der Formung des Zwickelbereiches während des Schrumpfens anpassen, einmal durch die Abwinkelung des beweglichen Dichtungsteiles 12 und zum anderen durch das verformbare Dichtungsmaterial der Dichtungsteile 6 im besonderen.

Figur 21 zeigt ein Ausführungsbeispiel eines Abdichtelementes 1, bei dem sich das Dichtungsteil 6 während der Erwärmung vergrößert, zum Beispiel wie bei dem Ausführungsbeispiel nach den Figuren 15 und 16.

Bei einem Ausführungsbeispiel nach Figur 22 sind ähnliche Verhältnisse wie bei dem Abdichtelement nach Figur 20 gegeben, wobei hier das für die Beweglichkeit des zusätzlichen Fixier- und Dichtungsteiles 15 eingesetzte Gelenk 16 am freien Ende des inneren Fixierteiles 4 angeordnet ist. Das Dichtungsteil 6 kann sich zum Beispiel auch über das Fixierteil 4 und über das zusätzliche Fixierteil 15 erstreckend, wobei hier dann die Beweglichkeit bei Normaltemperatur "eingefroren" ist. Durch zusätzlichen Einbau von Federelementen kann die gewünschte Bewegungsrichtung des beweglichen Dichtungsteils 15 zusätzlich unterstützt werden, z.B. eine Abspreizung oder Zurückziehung. Die Wirkung der Federelemente kann durch das Material des Dichtungsteils ebenfalls "eingefroren" sein.

Bei dem Ausführungsbeispiel nach Figur 23 ist ausgehend vom Ausführungsbeispiel nach Figur 22 das innere Fixierteil 4 des Abdichtelementes 1 zusätzlich eine senkrechte Abwinkelung 18 vorhanden, so daß es schon im ursprünglichen Zustand für relativ weite Zwickelbereiche verwendbar ist. Das bewegliche Dichtungsteil 17 dient zur weiteren Anpassung im Dichtungsbereich des Abschlusses. Die übrigen Verhältnisse sind bereits beschrieben.

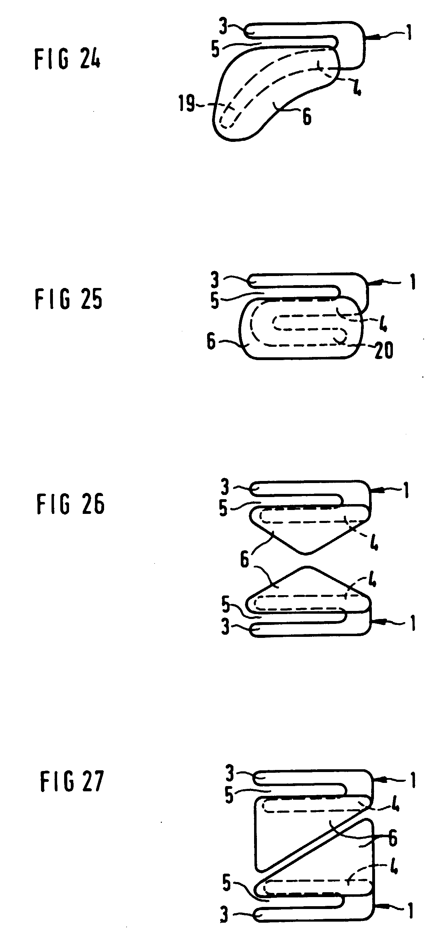

Bei einem Ausführungsbeispiel nach Figur 24 ist das innere Fixierteil 4 des Abdichtelementes 1 mit einem Fortsatz 19 versehen, der entweder starr, federnd oder plastisch verformbar ausgebildet sein kann. Ein solches Abdichtelement 1 kann in der gleichen, bisher beschriebenen Art verwendet werden.

Figur 25 zeigt ein Abdichtelement 1 in S-Form, wobei der innere S-förmige Ansatz wiederum starr, federnd oder plastisch verformbar sein kann.

Die Figur 26 zeigt ein Ausführungsbeispiel für die Bildung eines dichten Abschlusses mit Hilfe von zwei gleich aufgebauten Abdichtelementen 1. Sie bestehen jeweils aus den Fixierteilen 3-4, wie sie vorher schon beschrieben sind. Die inneren Fixierteile (hier nicht sichtbar) tragen jeweils die Dichtungsteile 6, die dreieckförmige Gestalt aufweisen und gegeneinander mit den Spitzen sich zuweisend durch Einschieben auf jeweils eine Muffenwandung montiert werden. Beim Schrumpfvorgang werden die Dichtungsteile 6 verformt, rücken aufeinander zu und verschmelzen zum dichten Abschluß. Der Verlauf der Muffenwandungen zwischen den einzelnen Kabeln ist wiederum maximal tangential.

Die Figur 27 zeigt ähnliche Verhältnisse wie in Figur 26 geschildert wurden, doch sind hier zwei sich ergänzende Dichtungsteile 6 auf den inneren Fixierteilen (nicht sichtbar) angebracht. Beide Dichtungsteile 6 ergänzen sich zu einem Block und schmelzen beim Schrumpfvorgang zu einem dichten Abschluß zusammen.

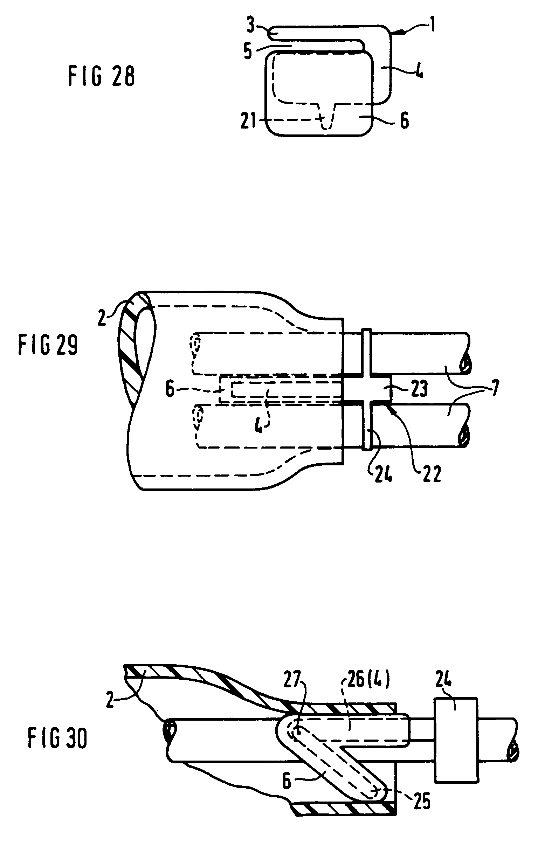

Figur 28 zeigt als Ausführungsbeispiel eines Abdichtelementes 1 einen spitzen Fortsatz 21 am inneren Fixierteil 4, der eine Formänderung und somit eine Formenanpassung zuläßt. Das ganze innere Gebilde läßt sich mit einem Dichtungsteil 6 in Form von verformbarem Material beschichten.

Figur 29 verdeutlicht ein weiteres Ausführungsbeispiel gemaß der Erfindung, wie es der Patentanspruch 20 zum Ausdruck bringt und das gemäß Verfahrensanspruch 3 eingesetzt wird. So wird in diesem Fall die Fixierung des Abdichtelementes 22 nicht an der Kabelmuffe 2 vorgenommen, sondern an wenigstens einem der eingeführten Kabel 7, zwischen denen es jeweils eingeführt wird. Damit ist die Kabelmuffe 2 bei der Montage völlig frei über dem Einführungsbereich herum angeordnet und kann ohne Behinderung schrumpfen. Bei diesem Vorgang kann der endgültige Verlauf der Kabelmuffenwandungen der Kabelmuffe 2 zwischen den Kabeln 7 ebenfalls wiederum nur maximal tangential sein, wobei das Dichtungsteil 6 des an den Kabeln 7 fixierte Abdichtelements 22 durch die schrumpfende Kabelmuffe 2 wieder so verformt wird, daß sich ein dichter Abschluß im Einführungsbereich ergibt. Die Verhältnisse des Dichtungsteiles 6 sind völlig vergleichbar mit denen der vorhergehenden Ausführungsbeispiele und müssen deshalb nicht erneut beschrieben werden. Der Unterschied liegt einzig darin, daß das Fixierteil 23 in gleicher Richtung wie das mit dem Dichtungsteil 6 beschichtete innere Fixierteil 4 verläuft und daß am Fixierteil 23 entsprechende Fixiermittel 24, zum Beispiel Spannbänder oder ähnliche Mechanismen angeordnet sind. Mit diesen Fixiermitteln 24 wird das Abdichtelement dann an mindestens einem der eingeführten Kabel 7 befestigt. Das Dichtungsteil 6 ist in der Menge des Dichtungsmaterials ebenfalls so bemessen, daß es in jedem Fall für einen dichten Abschluß ausreicht.

Die Figur 30 zeigt nun in Vertretung für alle möglichen Kombinationen mit vorhergehenden Beispielen eine dieser Kombinationsmöglichkeiten für Abdichtelemente, die nicht an der Kabelmuffe 2 sondern zumindest an einem der eingeführten Kabel 7 befestigt wird. Dieses Ausführungsbeispiel besitzt nun an seinem inneren Fixierteil 26 ein zusätzliches bewegliches Fixierteil 25, das über ein Gelenk 27 am inneren Fixierteil 26 des Abdichtelementes 22 gelagert ist. Die Fixierteile 26 und 27 sind entweder getrennt oder gemeinsam mit einem Dichtungsteil 6 aus entsprechend verformbarem Material beschichtet bzw. umgeben. Beim Schrumpfen der Kabelmuffe 2 wird das bewegliche Dichtungsteil 25 entsprechend angedrückt und bildet zusammen mit dem festen Dichtungsteil 26 und den Dichtungsteilen 6 den gesamten Abschluß im Einführungsbereich der Kabelmuffe 2.

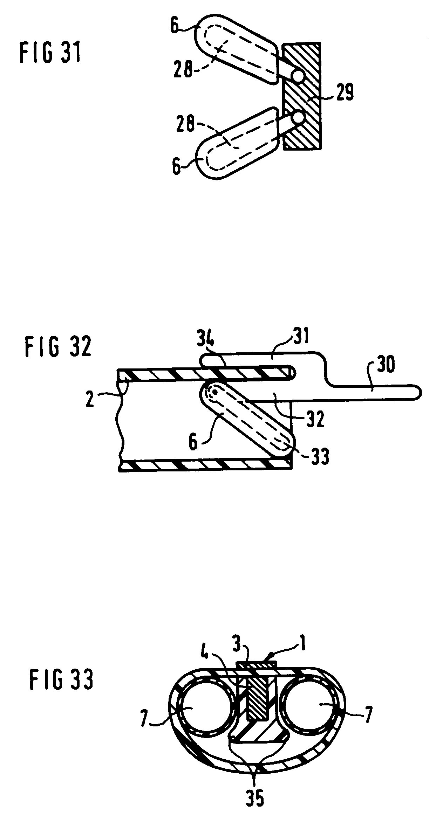

In Figur 31 wird erläutert, daß auch zwei bewegliche Dichtungsteile 28 am Dichtungsteil 29 befestigt werden können. Auf diese Weise läßt sich ebenfalls die Anpassung im Einführungsbereich erreichen, da die beiden Dichtungsteile 28 mit den verformbaren Dichtungsteilen 6 durch die schrumpfende Kabelmuffe 2 in ihren Endpositionen eingepreßt werden.

Figur 32 zeigt schließlich eine Kombination (30 - 31 - 32) aus den beiden Grundprinzipien. Hier wird am inneren Fixierteil 32 in der Längsrichtung ein Fixierteil 30 weitergeführt, mit dem die Fixierung an mindestens einem Kabel erfolgt. Weiterhin ist jedoch am inneren Fixierteil 32 aber auch ein äußeres Fixierteil 31 so angesetzt, daß sich wieder ein Schlitz 34 ergibt, in den die Kabelmuffe 2 eingeführt wird. Auf diese Weise sind nun hier zwei Fixierungen vorgenommen worden, einmal an der Kabelmuffe 2 und dann an mindestens einem der eingeführten Kabel 7. Die weiteren Verhältnisse entsprechen den bei den Einzelbeispielen bereits beschriebenen.

Figur 33 zeigt, daß das innere Fixierteil 4, ob beweglich oder nicht, am freien unteren Ende mindestens eine Ausformung 35 aufweist, die hier beispielsweise beidseitig ausgebildet ist. Dadurch wird gewährleistet, daß das Abdichtelement 1 nach seiner Installation auf der Muffenwandung nicht mehr aus dem Zwischenraum zwischen den beiden Kabeln herausrutschen kann. Solche Ausformungen können bei allen Ausführungsbeispielen von Abdichtelementen gemacht werden.

Im übrigen können an einem äußeren Fixierteil auch mehrere, auch bewegbare innere Fixierteile angeordnet werden.

## Patentansprüche

1. Verfahren zum Herstellen eines dichten Abschlusses bei einem mindestens zwei Kabel enthaltenden Einführungsbereich einer Kabelmuffe, deren Muffenwandung zumindest im Einführungsbereich schrumpfbar ist, mit Hilfe eines zwischen den Kabeln eingeführten und zumindest teilweise aus wärmeverformbarem Material bestehenden Dichtungsteils eines Abdichtelementes, wobei das Abdichtelement (1) zwischen den Kabeln (7) mit Fixierteilen (3, 4) des Abdichtelementes (1) an einer Muffenwandung der Kabelmuffe (2) einseitig fixiert wird und auf den Bereich des Abschlusses und das Abdichtelement (1) solange Wärme zugeführt wird bis das wärmeverformbare Dichtungsteil (6) des Abdichtelementes (1) dichtend verformt ist, wobei weiterhin die Kabelmuffe (2) mit ihrem schrumpfbaren Bereich lose um den Einführungsbereich herumgewickelt wird und das Abdichtelement (1) mit seinem Dichtungsteil (6) zwischen die eingeführten Kabel (7) eingeführt wird,
**dadurch gekennzeichnet**,
daß die gegenüberliegenden Muffenwandungen der Kabelmuffe (2) im Zwickelbereich zwischen den eingeführten Kabeln (7) bis zum tangentialen Verlauf zwischen den Kabeln (7) geschrumpft wird, wobei das bei Wärmezufuhr verformbare Dichtungsteil (6) in der Menge so bemessen ist, daß es den Zwickelbereich zwischen den Kabeln (7) und den tangential verlaufenden Muffenwandungen der Kabelmuffe (2) dichtend ausfüllt.

2. Verfahren nach Anspruch 1,
**dadurch gekennzeichnet**,
daß eine einzelne, zwischen den Kabeln (7) verlaufende Muffenwandung der Kabelmuffe (2) in einen zwischen einem äußeren (3) und einem inneren Fixierteil (4) angeordneten Schlitz (5) des Abdichtelementes (1) eingeschoben und dadurch fixiert wird.

3. Verfahren zum Herstellen eines dichten Abschlusses bei einem mindestens zwei Kabel (7) enthaltenden Einführungsbereich einer Kabelmuffe (2), deren Muffenwandung zumindest im Einführungsbereich schrumpfbar ist, mit Hilfe eines zwischen den Kabeln (7) eingeführten und zumindest teilweise aus wärmeverformbarem Material bestehenden Dichtungsteils eines Abdichtelementes (22), wobei die Kabelmuffe (2) mit ihrem schrumpfbaren Bereich lose um den Einführungsbereich herumgewickelt wird, auf den Bereich des Abschlusses der Kabelmuffe (2) und das Abdichtelement (22) solange Wärme zugeführt wird bis das auf einem inneren Fixierteil (4) angeordnete Dichtungsteil (6) des Abdichtelementes (22) verformt wird,
**dadurch gekennzeichnet**,
daß das Abdichtelement (22) zwischen den Kabeln (7) mit einem äußeren Fixierteil (23) des Abdichtelementes (22) an mindestens einem eingeführten Kabel (7) fixiert wird, und daß das Dichtungsteil (6) so verformt wird, daß es den Zwickelbereich zwischen den eingeführten Kabeln (7) und den sich gegenüberliegenden, maximal bis zum tangentialen Verlauf zwischen den Kabeln (7) geschrumpften Muffenwandungen der Kabelmuffe (2) dichtend ausfüllt.

4. Verfahren nach Anspruch 3,
**dadurch gekennzeichnet**,
daß das innere Fixierteil (4) mit dem Dichtungsteil (6) in den Einführungsbereich eingeschoben wird, daß das sich anschließende, äußere Fixierteil (23) mit einem Fixiermittel (24), vorzugsweise mit einem Spannband an mindestens einem Kabel (7) befestigt wird.

5. Verfahren nach einem der Ansprüch 1 bis 2,
**dadurch gekennzeichnet**,
daß mehrere Abdichtelemente (1) parallel-liegend an einer Muffenwandung der Kabelmuffe (2) zwischen jeweils zwei Kabeln (7) angeordnet werden.

6. Verfahren nach einem der Ansprüche 1 bis 2,
**dadurch gekennzeichnet**,
daß mehrere Abdichtelemente (1) parallel-liegend, jedoch wechselseitig an den sich gegenüberliegenden Muffenwandungen der Kabelmuffe (2) zwischen jeweils zwei Kabeln (7) angeordnet sind.

7. Verfahren nach einem der vorhergehenden Ansprüche,
**dadurch gekennzeichnet,**
daß die Kabel (7) in einer Ebene nebeneinanderliegend angeordnet sind.

8. Verfahren nach einem der Ansprüche 1 bis 6,
**dadurch gekennzeichnet,**
daß eine Dreifacheinführung von Kabeln (7) in Dreieckform mit drei Abdichtelementen (1) ausgeführt wird.

9. Verfahren nach einem der Ansprüche 1 bis 6,
**dadurch gekennzeichnet,**
daß eine Dreifacheinführung von Kabeln (7) in Dreieckform mit einem kurzen (1) und mit einem langen abgewinkelten Abdichtelement (1c) ausgeführt wird, wobei das abgewinkelte Abdichtelement (1c) mit seinem langen, abgewinkelten Fixierteil (4c) und Dichtungsteil (6) über zwei Zwickelbereiche hinweg zwischen den Kabeln (7) eingeführt wird.

10. Verfahren nach einem der Ansprüche 1 bis 6,
**dadurch gekennzeichnet,**
daß eine Vierfacheinführung von Kabeln (7) in Viereckform mit vier Abdichtelementen (1a) ausgeführt wird.

11. Verfahren nach einem der Ansprüche 1 bis 6,
**dadurch gekennzeichnet,**
daß eine Vierfacheinführung von Kabeln (7) in Viereckform mit zwei kurzen Abdichtelementen (1a) und einem langen Abdichtelement (1b), das sich quer über zwei Zwickelbereiche erstreckt, ausgeführt wird.

12. Verfahren nach einem der Ansprüche 1 bis 7,
**dadurch gekennzeichnet**,
daß Kabel (7) mit verschiedenen Durchmessern nach Größe geordnet und so angeordnet werden, daß jeweils beim Schrumpfen zwischen zwei benachbarten Kabeln (7) tangentialer Verlauf der Muffenwandungen der Kabelmuffe (2) gewährleistet wird.

13. Verfahren nach einem der vorhergehenden Ansprüche,
**dadurch gekennzeichnet**,
daß ein Abdichtelement (1d) mit mehrfingerigem äußerem Fixierteil (3d) auf die eine Muffenwandung der Kabelmuffe (2) aufgeschoben wird.

14. Verfahren nach einem der vorhergehenden Ansprüche,
**dadurch gekennzeichnet**,
daß ein Abdichtelement (le) verwendet wird, mit dem beim Erwärmen eine Vergrößerung des inneren Fixierteils (4e) erfolgt und daß hierdurch eine Materialverteilung des Dichtungsteils (6) zusätzlich vorgenommen wird.

15. Verfahren nach einem der Ansprüche 1 bis 13,
**dadurch gekennzeichnet**,
daß ein Abdichtelement (lf) verwendet wird, mit dem beim Erwärmen eine Anpassung auf den sich während des Schrumpfens verkleinernden Zwickelbereich vorgenommen wird.

16. Verfahren nach einem der vorhergehenden Ansprüche,
**dadurch gekennzeichnet**,
daß die inneren Fixierteile (4) von zwei Abdichtelementen (1) spiegelbildlich und beweglich miteinander über ein Verbindungsglied (10) verbunden werden und daß das kombinierte Abdichtelement (1-1) in den Zwickelbereich zwischen den Kabeln (7) eingeführt und jedes der Abdichtelemente (1) für sich an der jeweiligen Muffenwand der Kabelmuffe (2) fixiert wird, wobei sich die Abdichtelemente (1) so einstellen, daß die Muffenwandungen im Zwickelbereich jeweils maximal tangential zwischen den Kabeln (7) verlaufen.

17. Verfahren nach einem der Ansprüche 1 bis 15,
**dadurch gekennzeichnet**,
daß zwei einzelne Abdichtelemente (1) übereinander angeordnet werden, wobei an jeder Muffenwandung (der Kabelmuffe (2) im Zwickelbereich jeweils nur ein Abdichtelement (1) fixiert wird.

18. Verfahren nach einem der vorhergehenden Ansprüche,
**dadurch gekennzeichnet**,
daß ein kombiniertes Abdichtelement (30 - 31 - 32) sowohl an einer der Muffenwandungen der Kabelmuffe (2) im Zwickelbereich als auch an mindestens einem der eingeführten Kabel (7) fixiert wird.

19. Abdichtelement (1) für die Verwendung bei einem Verfahren nach einem der Ansprüche 1, 2 oder 5 bis 18, zum Herstellen eines dichten Abschlusses bei einem mindestens zwei Kabel (7) enthaltenden Einführungsbereich einer schrumpfbaren Kabelmuffe (2), wobei es zwischen den Kabeln (7) angeordnet ist und in diesem Bereich ein Dichtungsteil (6) aufweist, das zumindest teilweise aus wärmeschmelzbarem Material besteht, wobei es auf die Kabelmuffe (2) bezogen ein inneres Fixierteil (4) und ein äußeres Fixierteil (3) aufweist, das innere (4) und das äußere Fixierteil (3) an einem ihrer Enden miteinander so verbunden sind, daß ein längsverlaufender Schlitz (5) zwischen den beiden Fixierteilen (3, 4) verbleibt, dessen Spaltbreite der Dicke einer einzigen Muffenwandung der Kabelmuffe (2) entspricht, so daß das Abdichtelement (1) durch Einführung der Muffenwandung in den Schlitz (5) an der Kabelmuffe (2) fixierbar ist,
**dadurch gekennzeichnet**,
daß das auf dem inneren Fixierteil (4) angeordnete und aus bei Wärmezufuhr verformbarem Material bestehende Dichtungsteil (6) in der Menge so bemessen ist, daß damit der Zwickelbereich zwischen den Kabeln (7) und den maximal tangential zwischen den Kabeln (7) verlaufenden Muffenwandungen dichtend ausgefüllt ist.

20. Abdichtelement (22) für die Verwendung bei einem Verfahren nach einem der Ansprüche 3 bis 18, zum Herstellen eines dichten Abschlusses bei einem mindestens zwei Kabel (7) enthaltenden Einführungsbereich einer schrumpfbaren Kabelmuffe (2), wobei es zwischen den Kabeln (7) angeordnet ist und in diesem Bereich ein Dichtungsteil (6) aufweist, das zumindest teilweise aus wärmeschmelzbarem Material besteht,
**dadurch gekennzeichnet**,
daß das Abdichtelement (22) auf die Kabelmuffe (2) bezogen ein inneres Fixierteil (4) und ein äußeres Fixierteil (23) aufweist, daß das innere Fixierteil (4) und das äußere Fixierteil (23) in Einführungsrichtung hintereinanderliegend verbunden sind, daß das äußere Fixierteil (23) zumindest an einem der eingeführten Kabel (7) mit Fixiermitteln (24) fixierbar ist und daß das innere Fixierteil (4) das Dichtungsteil (6) aus bei Wärmezufuhr verformbarem Material aufweist und daß die Menge des verformbaren Materials des Dichtungsteiles (6) so bemessen ist, daß es den Zwickelbereich zwischen den Kabeln (7) und dem tangentialen Verlauf der Muffenwandungen zwischen den Kabeln (7) dichtend ausfüllt.

21. Abdichtelement nach Anspruch 19,
**dadurch gekennzeichnet**,
daß das äußere Fixierteil (3) am freien Ende aufgebogen ist.

22. Abdichtelement nach einem der Ansprüche 19 oder 21,
**dadurch gekennzeichnet**,
daß daß das äußere Fixierteil (3) Querrillungen (8) aufweist.

23. Abdichtelement nach einem der Ansprüche 19 oder 21 bis 22,
**dadurch gekennzeichnet,**
daß das innere Fixierteil (4c) abgewickelt ist.

24. Abdichtelement nach einem der Ansprüche 19 oder 21 bis 23,
**dadurch gekennzeichnet,**
daß das äußere Fixierteil (3) breiter ist als das innere Fixierteil (4).

25. Abdichtelement nach einem der Ansprüche 19 bis 24,
**dadurch gekennzeichnet,**
daß das vorzugsweise auf dem inneren Fixierteil (4) aufgebrachte Dichtungsteil (6) aus schmelzbarem Material, vorzugsweise aus einem Heißschmelzkleber, besteht.

26. Abdichtelement nach einem der Ansprüche 19 bis 25,
**dadurch gekennzeichnet,**
daß die Fixierteile (3, 4) aus wärmeleitfähigem Material, vorzugsweise aus korrosionsbeständigem Metall bestehen.

27. Abdichtelement nach einem der Ansprüche 19 bis 26,
**dadurch gekennzeichnet,**
daß das innere Fixierteil (4e) bei Wärmezufuhr zusammenpreßbar ist, vorzugsweise durch teleskopartigen Aufbau.

28. Abdichtelement nach einem der Ansprüche 19 bis 27,
**dadurch gekennzeichnet,**
daß das innere Fixierteil (4f) bei Wärmezufuhr aufspreizbar ist, vorzugsweise durch einen Federmechanismus.

29. Abdichtelement nach einem der Ansprüche 19 bis 28,
**dadurch gekennzeichnet,**
daß zwei Abdichtelemente (1) über einen Steg (10) miteinander beweglich gekoppelt sind.

30. Abdichtelement nach einem der Ansprüche 19 bis 29,
**dadurch gekennzeichnet,**
daß zwei Abdichtelemente (1) über ein Gelenk (11) miteinander beweglich gekoppelt sind.

31. Abdichtelement nach einem der Ansprüche 19 bis 30,
**dadurch gekennzeichnet,**
daß ein an der Muffenwandung fixierbares Abdichtelement (31 - 32) mit einem an mindestens einem Kabel (7) fixierbaren Abdichtelement (30) verbunden ist.

32. Abdichtelement nach einem der Ansprüche 19 bis 31,
**dadurch gekennzeichnet,**
daß das innere Fixierteil (4) mit seinem Dichtungsteil (6) ein vorzugsweise bei Wärmeeinwirkung bewegbares, zusätzliches Fixierteil (12, 15) mit Dichtungsteil (6) aufweist.

33. Abdichtelement nach einem der Ansprüche 19 bis 32,
**dadurch gekennzeichnet,**
daß das innere Fixierteil (4) eine Abwinkelung (18) und ein bewegliches zusätzliches Fixierteil (17) mit Dichtungsteil (6) aufweist.

34. Abdichtelement nach einem der Ansprüche 19 bis 33,
**dadurch gekennzeichnet,**
daß das innere Fixierteil (4) mit einem aus plastischem oder elastischem, bei Wärmezufuhr verformbarem Material bestehenden Fortsatz (19) versehen ist.

35. Abdichtelement nach einem der Ansprüche 19 bis 34,
**dadurch gekennzeichnet,**
daß die gesamten Fixierteile (9 - 4 - 10) eine S-Form bilden.

36. Abdichtelement nach einem der vorhergehenden Ansprüche,
**dadurch gekennzeichnet,**
daß das innere Fixierteil (4) dreieckförmig ausgebildet ist.

37. Abdichtelement nach einem der Ansprüche 19 bis 35,
**dadurch gekennzeichnet,**
daß das innere Fixierteil und/oder das Dichtungsteil (6) einen verformbaren, spitzen Fortsatz (21) aufweist.

38. Abdichtelement nach einem der Ansprüche 19 bis 36,
**dadurch gekennzeichnet,**
daß am äußeren Fixierteil (4) mehrere innere, vorzugsweise bewegbare, innere Fixierteile angeordnet sind.

39. Abschluß im Einführungsbereich einer schrumpfbaren Kabelmuffe mit mindestens zwei Kabeln, hergestellt nach einem der Verfahren der Ansprüche 1 bis 18, unter Verwendung eines Abdichtelementes nach einem der Ansprüche 19 bis 38,
**dadurch gekennzeichnet,**
daß dieser durch Umformung des im Abdichtelement (1, 22) enthaltenen Dichtungsteils (6) aus bei Wärme verformbarem Material während des Schrumpfvorganges gebildet ist, wobei der Verlauf der Muffenwandungen der Kabelmuffe (2) im Zwickelbereich zwischen zwei Kabeln (7) jeweils maximal tangential ist und daß Fixierteile (3, 4, 23, 30, 31, 32) des Abdichtelementes (1, 22, 30 - 31 - 32) an einer der Muffenwandungen der Kabelmuffe (2) im Einführungsbereich und/oder an mindestens einem der eingeführten Kabel (7) angeordnet sind.

40. Abdichtelement nach einem der Ansprüche 19 bis 38,
**dadurch gekennzeichnet,**
daß das innere Fixierteil (4) und/oder das aufgebrachte Dichtungsteil (6) am freien Ende mindestens eine seitliche Ausformung (35) aufweist.

## Claims

1. Method for producing a tight termination at an introduction region, containing at least two cables, of a cable sleeve, whose sleeve wall is shrinkable, at least in the introduction region, with the aid of a sealing part of a seal element, said sealing part being introduced betweeen the cables and consisting at least partly of thermally deformable material, the seal element (1) being fixed on one side between the cables (7) on one sleeve wall of the cable sleeve (2) using fixing parts (3, 4) of the seal element (1), and heat being supplied to the region of the termination and the seal element (1) until the thermally deformable sealing part (6) of the seal element (1) is deformed in a sealing manner, furthermore the cable sleeve (2) being wound with its shrinkable region loosely around the introduction region and the seal element (1) being introduced with its sealing part (6) between the introduced cables (7), characterized in that the opposite sleeve walls of the cable sleeve (2) are shrunk in the gore region between the introduced cables (7) until they run tangentially between the cables (7), the sealing part (6), which can be deformed when heat is supplied, being dimensioned in terms of amount such that it fills, in a sealing manner, the gore region between the cables (7) and the tangentially running sleeve walls of the cable sleeve (2).

2. Method according to Claim 1, characterized in that a single sleeve wall, running between the cables (7), of the cable sleeve (2) is pushed into a slot (5) arranged between an outer (3) and an inner fixing part (4) of the seal element (1) and is thereby fixed.

3. Method for producing a tight termination at an introduction region, containing at least two cables (7), of a cable sleeve (2), whose sleeve wall is shrinkable, at least in the introduction region, with the aid of a sealing part of a seal element (22), said sealing part being introduced between the cables (7) and consisting at least partly of thermally deformable material, the cable sleeve (2) being wound with its shrinkable region loosely around the introduction region, heat being supplied to the region of the termination of the cable sleeve (2) and the seal element (22) until the sealing part (6), arranged on an inner fixing part (4), of the seal element (22) is deformed, characterized in that the seal element (22) is fixed on at least one introduced cable (7) between the cables (7), using an outer fixing part (23) of the seal element (22), and in that the sealing part (6) is deformed such that it fills, in a sealing manner, the gore region between the introduced cables (7) and the opposite sleeve walls, shrunk maximally until they run tangentially between the cables (7), of the cable sleeve (2).

4. Method according to Claim 3, characterized in that the inner fixing part (4) is pushed into the introduction region with the sealing part (6), in that the adjacent outer fixing part (23) is fastened to at least one cable (7) using a fixing means (24), preferably using a clamping band.

5. Method according to one of Claims 1 to 2, characterized in that a plurality of seal elements (1) are arranged lying parallel on a sleeve wall of the cable sleeve (2), between two cables (7) in each case.

6. Method according to one of Claims 1 to 2, characterized in that a plurality of seal elements (1) are arranged lying parallel but on alternate sides of the opposite sleeve walls of the cable sleeve (2), between two cables (7) in each case.

7. Method according to one of the preceding claims, characterized in that the cables (7) are arranged lying alongside one another in one plane.

8. Method according to one of Claims 1 to 6, characterized in that a triple introduction of cables (7) in triangular form is executed using three seal elements (1).

9. Method according to one of Claims 1 to 6, characterized in that a triple introduction of cables (7) in triangular form is executed using a short (1) and using a long, bent seal element (lc), the bent seal element (lc) being introduced with its long, bent fixing part (4c) and sealing part (6) over two gore regions between the cables (7).

10. Method according to one of Claims 1 to 6, characterized in that a fourfold introduction of cables (7) in quadrilateral form is executed using four seal elements (1a).

11. Method according to one of Claims 1 to 6, characterized in that a fourfold introduction of cables (7) in quadrilateral form is executed using two short seal elements (1a) and a long seal element (1b) which extends transversely over two gore regions.

12. Method according to one of Claims 1 to 7, characterized in that cables (7) of various diameters are arranged according to size and in such a way that in each case during shrinking a tangential course of the sleeve walls of the cable sleeve (2) between two adjacent cables (7) is ensured.

13. Method according to one of the preceding claims, characterized in that a seal element (1d) having a multifingered outer fixing part (3d) is pushed onto one sleeve wall of the cable sleeve (2).

14. Method according to one of the preceding claims, characterized in that use is made of a seal element (le) with which, when heated up, an enlargement of the inner fixing part (4e) takes place, and in that by this means a material distribution of the sealing part (6) is additionally undertaken.

15. Method according to one of Claims 1 to 13, characterized in that use is made of a seal element (1f) which, when heated up, adapts to the gore region, which reduces in size during the shrinking.

16. Method according to one of the preceding claims, characterized in that the inner fixing parts (4) of two seal elements (1) are connected in mirror-image fashion and movably to one another via a connecting element (10), and in that the combined seal element (1-1) is introduced into the gore region between the cables (7) and each of the seal elements (1) is individually fixed on the respective sleeve wall of the cable sleeve (2), the seal elements (1) being set such that the sleeve walls in each case run maximally tangentially between the cables (7) in the gore region.

17. Method according to one of Claims 1 to 15, characterized in that two individual seal elements (1) are arranged one above the other, in each case only one seal element (1) being fixed on each sleeve wall (of the cable sleeve (2)) in the gore region.

18. Method according to one of the preceding claims, characterized in that a combined seal element (30 - 31-32) is fixed both on one of the sleeve walls of the cable sleeve (2) in the gore region and also on at least one of the introduced cables (7).

19. Seal element (1) for use in a method according to one of Claims 1, 2 or 5 to 18, for producing a tight termination at an introduction region, containing at least two cables (7), of a shrinkable cable sleeve (2), said seal element being arranged between the cables (7) and having, in this region, a sealing part (6) which consists at least partly of thermally meltable material, having an inner fixing part (4) and an outer fixing part (3) in relation to the cable sleeve (2), the inner (4) and the outer fixing part (3) being connected to each other at one of their ends in such a way that a longitudinally extending slot (5) remains between the two fixing parts (3, 4), the gap width of said slot corresponding to the thickness of a single sleeve wall of the cable sleeve (2), so that the seal element (1) can be fixed by introducing the sleeve wall into the slot (5) on the cable sleeve (2), characterized in that the sealing part (6), which is arranged on the inner fixing part (4) and consists of material that can be deformed when heat is supplied, is dimensioned in terms of amount such that the gore region between the cables (7) and the sleeve walls, running maximally tangentially between the cables (7), is therefore filled in a sealing manner.

20. Seal element (22) for use in a method according to one of Claims 3 to 18, for producing a tight termination at an introduction region, containing at least two cables (7), of a shrinkable cable sleeve (2), said seal element being arranged between the cables (7) and having, in this region, a sealing part (6) which consists at least partly of thermally meltable material, characterized in that the seal element (22) has an inner fixing part (4) and an outer fixing part (23) in relation to the cable sleeve (2), in that the inner fixing part (4) and the outer fixing part (23) are connected lying one behind the other in the introduction direction, in that the outer fixing part (23) can be fixed at least on one of the introduced cables (7) using fixing means (24), and in that the inner fixing part (4) has the sealing part (6) made of material which can be deformed when heat is supplied, and in that the quantity of the deformable material of the sealing part (6) is such that it fills, in a sealing manner, the gore region between the cables (7) and the tangential course of the sleeve walls between the cables (7).

21. Seal element according to Claim 19, characterized in that the outer fixing part (3) is beat up at the free end.

22. Seal element according to one of Claims 19 or 21, characterized in that the outer fixing part (3) has transverse grooves (8).

23. Seal element according to one of Claims 19 or 21 to 22, characterized in that the inner fixing part (4c) is bent.

24. Seal element according to one of Claims 19 or 21 to 23, characterized in that the outer fixing part (3) is broader than the inner fixing part (4).

25. Seal element according to one of Claims 19 to 24, characterized in that the sealing part (6), which is preferably fitted on the inner fixing part (4), consists of meltable material, preferably of a hot-melt adhesive.

26. Seal element according to one of Claims 19 to 25, characterized in that the fixing parts (3, 4) consist of thermally conductive material, preferably of corrosion-resistant metal.

27. Seal element according to one of Claims 19 to 26, characterized in that the inner fixing part (4e) can be pressed together when heat is supplied, preferably as a result of telescopic construction.

28. Seal element according to one of Claims 19 to 27, characterized in that the inner fixing part (4f) can be spread open when heat is supplied, preferably by a spring mechanism.

29. Seal element according to one of Claims 19 to 28, characterized in that two seal elements (1) are movably coupled to each other via a web (10).

30. Seal element according to one of Claims 19 to 29, characterized in that two seal elements (1) are movably coupled to each other via a joint (11).

31. Seal element according to one of Claims 19 to 30, characterized in that a seal element (31 - 32) which can be fixed on the sleeve wall is connected to a seal element (30) which can be fixed on at least one cable (7).

32. Seal element according to one of Claims 19 to 31 characterized in that the inner fixing part (4) with its sealing part (6) has an additional fixing part (12, 15) which can preferably be moved under the influence of heat and has a sealing part (6).

33. Seal element according to one of Claims 19 to 32, characterized in that the inner fixing part (4) has a bent portion (18) and a movable additional fixing part (17) with sealing part (6).

34. Seal element according to one of Claims 19 to 33, characterized in that the inner fixing part (4) is provided with an extension (19) consisting of plastic or elastic material which can be deformed when heat is supplied.

35. Seal element according to one of Claims 19 to 34, characterized in that the fixing parts (9 - 4 - 10) in their entirety form an S shape.

36. Seal element according to one of the preceding claims, characterized in that the inner fixing part (4) is of triangular design.

37. Seal element according to one of Claims 19 to 35, characterized in that the inner fixing part and/or the sealing part (6) has/have a deformable, pointed extension (21).

38. Seal element according to one of Claims 19 to 36, characterized in that a plurality of inner, preferably movable inner, fixing parts are arranged on the outer fixing part (4).

39. Termination in the introduction region of a shrinkable cable sleeve having at least two cables, produced according to one of the methods of Claims 1 to 18, using a seal element according to one of Claims 19 to 38, characterized in that said termination is formed by reshaping the sealing part (6), which is contained in the seal element (1, 22) and is made of material which can be deformed when heated, during the shrinking process, the course of the sleeve walls of the cable sleeve (2) in the gore region between two cables (7) being in each case maximally tangential, and in that fixing parts (3, 4, 23, 30, 31, 32) of the seal element (1, 22, 30 - 31 - 32) are arranged on one of the sleeve walls of the cable sleeve (2) in the introduction region and/or on at least one of the introduced cables (7).

40. Seal element according to one of Claims 19 to 38, characterized in that the inner fixing part (4) and/or the fitted sealing part (6) has/have at least one lateral protrusion (35) at the free end.

## Revendications

1. Procédé de fabrication d'une fermeture étanche pour une zone d'introduction, contenant au moins deux câbles, d'un manchon de câbles dont la paroi de manchon est rétractable au moins dans la zone d'introduction, à l'aide d'une pièce d'étanchéité d'un élément formant dispositif d'étanchéité introduite entre les câbles et constituée au moins partiellement d'un matériau déformable à chaud, l'élément (1) formant dispositif d'étanchéité étant immobilisé d'un seul côté entre les câbles (7) par des pièces (3, 4) d'immobilisation de l'élément (1) formant dispositif d'étanchéité sur une paroi du manchon (2) de câble et dans la zone de la fermeture et de la chaleur étant apportée à l'élément (1) formant dispositif d'étanchéité jusqu'à ce que la pièce (6) d'étanchéité de l'élément (1) formant dispositif d'étanchéité déformable à chaud soit déformée de manière à donner de l'étanchéité, le manchon (2) de câble étant de plus enfilé de manière lâche par sa partie rétractable sur la zone d'introduction et l'élément (1) formant dispositif d'étanchéité étant introduit par sa pièce (6) d'étanchéité entre les câbles (7) introduits, caractérisé en ce que l'on rétracte les parois opposées du manchon (2) de câble, dans la partie de gousset située entre les câbles (7) introduits, jusqu'à ce qu'elles s'étendent tangentiellement entre les câbles, la pièce (6) d'étanchéité déformable par apport de chaleur étant prévue en une quantité telle qu'elle remplit de façon étanche la partie de gousset comprise entre les câbles (7) et les parois du manchon (2) de câble s'étendant tangentiellement.

2. Procédé suivant la revendication 1, caractérisé en ce que l'on enfile et l'on immobilise une paroi individuelle du manchon (2) de câbles, qui s'étend entre les câbles (7), dans une fente (5) de l'élément (1) formant dispositif d'étanchéité qui est ménagée entre une pièce (3) extérieure d'immobilisation et une pièce (4) intérieure d'immobilisation.

3. Procédé de fabrication d'une fermeture étanche pour une zone d'introduction, contenant au moins deux câbles (7), d'un manchon (2) de câbles dont la paroi de manchon est rétractable au moins dans la zone d'introduction, à l'aide d'une pièce d'étanchéité d'un élément (22) formant dispositif d'étanchéité introduite entre les câbles (7) et constituée au moins partiellement d'un matériau déformable à chaud, le manchon (2) de câble étant de plus enfilé de manière lâche par sa partie rétractable sur la zone d'introduction, dans la zone de la fermeture du manchon (2) de câble, et de la chaleur étant apportée à l'élément (22) formant dispositif d'étanchéité jusqu'à ce que la pièce (6) d'étanchéité de l'élément (22) formant dispositif d'étanchéité montée sur une pièce (4) intérieure d'immobilisation soit déformée, caractérisé en ce que l'on immobilise l'élément (22) formant dispositif d'étanchéité situé entre les câbles (7), par une pièce (23) extérieure d'immobilisation de l'élément (22) formant dispositif d'étanchéité, sur au moins un câble (7) introduit et en ce que l'on déforme la pièce (6) d'étanchéité de manière qu'elle remplisse de façon étanche la partie de gousset située entre les câbles (7) introduits et les parois du manchon (2) de câble opposées, rétractées entre les câbles (7) au maximum jusqu'à la tangente.

4. Procédé suivant la revendication 3, caractérisé en ce que l'on enfile la pièce (4) intérieure d'immobilisation comportant la pièce (6) d'étanchéité dans la zone d'introduction et en ce que l'on fixe à au moins un câble (7) la pièce (23) extérieure d'immobilisation qui s'y raccorde et qui comporte un moyen (24) d'immobilisation, de préférence un collier de serrage.

5. Procédé suivant l'une des revendications 1 à 2, caractérisé en ce qu'il est monté parallèlement sur une paroi du manchon (2) de câbles, chacun entre deux câbles (7), plusieurs éléments (1) formant dispositif d'étanchéité.

6. Procédé suivant l'une des revendications 1 à 2, caractérisé en ce qu'il est monté parallèlement, mais alternativement sur les parois opposées du manchon (2) de câbles, chacun entre deux câbles (7), plusieurs éléments (1) formant dispositif d'étanchéité.

7. Procédé suivant l'une des revendications précédentes, caractérisé en ce que les câbles (7) sont montés côte-à-côte dans un plan.

8. Procédé suivant l'une des revendications 1 à 6, caractérisé en ce qu'une triple introduction de câbles (7) est réalisée sous forme de triangle par trois éléments (1) formant dispositif d'étanchéité.

9. Procédé suivant l'une des revendications 1 à 6, caractérisé en ce qu'une triple introduction de câbles (7) est réalisée sous forme de triangle par un élément (1) court formant dispositif d'étanchéité et par un élément (1c) long coudé formant dispositif d'étanchéité, l'élément (1c) long coudé formant dispositif d'étanchéité et comportant sa pièce (4c) d'immobilisation longue coudée et une pièce (6) d'étanchéité étant introduit entre les câbles en passant par deux parties de gousset.

10. Procédé suivant l'une des revendications 1 à 6, caractérisé en ce qu'une quadruple introduction de câbles (7) est réalisée sous forme rectangulaire par quatre éléments (la) formant dispositif d'étanchéité.

11. Procédé suivant l'une des revendications 1 à 6, caractérisé en ce qu'une quadruple introduction de câbles (7) est réalisée sous forme rectangulaire par deux éléments (la) courts formant dispositif d'étanchéité et un élément (1b) long formant dispositif d'étanchéité, qui s'étend transversalement sur deux parties de gousset.

12. Procédé suivant l'une des revendications 1 à 7, caractérisé en ce que des câbles (7) ayant des diamètres différents sont rangés par dimension et disposés de manière que, lors du retrait, il soit assuré que les parois du manchon (2) de câbles s'étendent tangentiellement entre deux câbles voisins.

13. Procédé suivant l'une des revendications 1 à 7, caractérisé en ce qu'un élément (1d) formant dispositif d'étanchéité, comportant une pièce (3d) extérieure d'immobilisation à plusieurs doigts, est enfilé sur l'une des parois du manchon (2) de câbles.

14. Procédé suivant l'une des revendications précédentes, caractérisé en ce que l'on utilise un élément (le) formant dispositif d'étanchéité, par lequel s'effectue lors du chauffage un agrandissement de la pièce (4e) intérieure d'immobilisation et en ce qu'il est ainsi procédé de plus à une répartition du matériau de la pièce (6) d'étanchéité.

15. Procédé suivant l'une des revendications 1 à 13, caractérisé en ce que l'on utilise un élément (1f) formant dispositif d'étanchéité, par lequel s'effectue lors du chauffage une adaptation à la partie de gousset qui se réduit pendant le retrait.

16. Procédé suivant l'une des revendications précédentes, caractérisé en ce que les pièces (4) intérieures d'immobilisation de deux éléments formant dispositif d'étanchéité sont reliées entre elles, en étant symétriques comme en un miroir et mobiles, par l'intermédiaire d'un élément (10) de liaison, et en ce que l'élément (1-1) combiné formant dispositif d'étanchéité est introduit dans la partie de gousset comprise entre les câbles et en ce que chaque élément (1) formant dispositif d'étanchéité est immobilisé pour soi sur la paroi associée du manchon (2) de câbles, les éléments (1) formant dispositif d'étanchéité se réglant de manière que, dans la partie de gousset, les parois du manchon s'étendent au maximum tangentiellement entre les câbles (7).

17. Procédé suivant l'une des revendications 1 à 15, caractérisé en ce que deux éléments (1) individuels formant dispositif d'étanchéité sont superposés, un seul élément (1) formant dispositif d'étanchéité étant immobilisé sur chaque paroi du manchon (2) de câbles, dans la partie de gousset.

18. Procédé suivant l'une des revendications précédentes, caractérisé en ce que l'on immobilise un élément (30 - 31 - 32) combiné formant dispositif d'étanchéité aussi bien sur une des parois du manchon (2) de câbles, dans la partie de gousset, que, également, sur au moins un des câbles (7) introduits.

19. Elément (1) formant dispositif d'étanchéité destiné à être utilisé dans un procédé suivant une des revendications 1, 2 ou 5 à 18, en vue de produire une fermeture dans une zone d'introduction, comportant au moins deux câbles (7), d'un manchon (2) de câbles rétractable, l'élément étant disposé entre les câbles (7) et comportant dans cette zone une pièce (6) d'étanchéité qui est au moins en partie en un matériau fusible, l'élément comportant une pièce (3) d'immobilisation, extérieure par rapport au manchon (2) de câbles, et une pièce (4) d'immobilisation, intérieure par rapport au manchon (2) de câbles, la pièce (4) intérieure d'immobilisation et la pièce (3) extérieure d'immobilisation étant reliées l'une à l'autre à l'une de leurs extrémités libres de manière que subsiste entre les deux pièces (3, 4) d'immobilisation une fente qui s'étend longitudinalement et dont la largeur correspond à l'épaisseur d'une seule paroi du manchon (2) de câbles, si bien que l'élément (1) formant dispositif d'étanchéité peut être immobilisé sur le manchon (2) de câbles en introduisant la paroi du manchon dans la fente (5), caractérisé en ce que la pièce (6) d'étanchéité disposée sur la pièce (4) intérieure d'immobilisation et constituée d'un matériau déformable par apport de chaleur est prévue en une quantité telle que la partie de gousset comprise entre les câbles (7) et les parois du manchon de câble s'étendant entre les câbles (7) au maximum tangentiellement est remplie de façon étanche.

20. Elément (22) formant dispositif d'étanchéité destiné à être utilisé dans un procédé suivant une des revendications 3 à 18, en vue de produire une fermeture dans une zone d'introduction, comportant au moins deux câbles (7), d'un manchon (2) de câbles rétractable, l'élément étant disposé entre les câbles (7) et comportant dans cette zone une pièce (6) d'étanchéité qui est au moins en partie en un matériau fusible, caractérisé en ce que l'élément (22) formant dispositif d'étanchéité comporte une pièce (23) d'immobilisation, extérieure par rapport au manchon de câbles, et une pièce (4) d'immobilisation, intérieure par rapport au manchon de câbles, en ce que la pièce (4) intérieure d'immobilisation et la pièce (23) extérieure d'immobilisation sont reliées l'une à l'autre en se succédant dans la direction d'introduction, en ce que la pièce (23) extérieure d'immobilisation peut être immobilisée par des moyens (24) d'immobilisation sur au moins un des câbles (7) introduits et en ce que la pièce (4) intérieure d'immobilisation comporte la pièce (6) d'étanchéité en un matériau déformable par apport de chaleur et en ce que le matériau déformable de la pièce (6) d'étanchéité est prévu en une quantité telle qu'il remplit de manière étanche la partie de gousset située entre les câbles (7) et les parois du manchon s'étendant tangentiellement entre les câbles (7).

21. Elément formant dispositif d'étanchéité suivant la revendication 19, caractérisé en ce que la pièce (3) extérieure d'immobilisation est coudée à son extrémité libre.

22. Elément formant dispositif d'étanchéité suivant l'une des revendications 19 ou 21, caractérisé en ce que la pièce (3) extérieure d'immobilisation comporte des cannelures (8) transversales.

23. Elément formant dispositif d'étanchéité suivant l'une des revendications 19 ou 21 à 22, caractérisé en ce que la pièce (4c) intérieure d'immobilisation est dépliée.

24. Elément formant dispositif d'étanchéité suivant l'une des revendications 19 ou 21 à 23, caractérisé en ce que la pièce (3) extérieure d'immobilisation est plus large que la pièce (4) intérieure d'immobilisation.

25. Elément formant dispositif d'étanchéité suivant l'une des revendications 19 à 24, caractérisé en ce que la pièce (6) d'étanchéité, qui est placée de préférence sur la pièce (4) intérieure d'immobilisation, est en un matériau fusible, de préférence en une colle fusible.

26. Elément formant dispositif d'étanchéité suivant l'une des revendications 19 à 25, caractérisé en ce que les pièces (3, 4) d'immobilisation sont en un matériau thermoconducteur, de préférence en un métal résistant à la corrosion.

27. Elément formant dispositif d'étanchéité suivant l'une des revendications 19 à 26, caractérisé en ce que la pièce (4e) intérieure d'immobilisation peut être comprimée lors de l'apport de chaleur, de préférence par une structure télescopique.

28. Elément formant dispositif d'étanchéité suivant l'une des revendications 19 à 27, caractérisé en ce que la pièce (4e) intérieure d'immobilisation peut être écartée lors de l'apport de chaleur, de préférence par un mécanisme de ressort.

29. Elément formant dispositif d'étanchéité suivant l'une des revendications 19 à 28, caractérisé en ce que deux éléments (1) formant dispositif d'étanchéité sont couplés entre eux de manière mobile par l'intermédiaire d'une barrette (10).

30. Elément formant dispositif d'étanchéité suivant l'une des revendications 19 à 29, caractérisé en ce que deux éléments (1) formant dispositif d'étanchéité sont couplés entre eux de manière mobile par l'intermédiaire d'une articulation (11).

31. Elément formant dispositif d'étanchéité suivant l'une des revendications 19 à 30, caractérisé en ce qu'un éléments (31 - 32) formant dispositif d'étanchéité, pouvant être immobilisé sur la paroi du manchon, est relié à un éléments (30) formant dispositif d'étanchéité, pouvant être immobilisé sur au moins un câble (7).

32. Elément formant dispositif d'étanchéité suivant l'une des revendications 19 à 31, caractérisé en ce que la pièce (4) intérieure d'immobilisation, comportant sa pièce (6) d'étanchéité, comporte une pièce (12, 15) d'immobilisation supplémentaire, qui comporte une pièce (6) d'étanchéité et qui peut être déplacée de préférence sous l'effet de la chaleur.

33. Elément formant dispositif d'étanchéité suivant l'une des revendications 19 à 32, caractérisé en ce que la pièce (4) intérieure d'immobilisation comporte une partie (18) coudée et une pièce (17) supplémentaire mobile d'immobilisation comportant une pièce (6) d'étanchéité.

34. Elément formant dispositif d'étanchéité suivant l'une des revendications 19 à 33, caractérisé en ce que la pièce (4) intérieure d'immobilisation est munie d'un prolongement (19) en un matériau plastique ou élastique, déformable par apport de chaleur;

35. Elément formant dispositif d'étanchéité suivant l'une des revendications 19 à 34, caractérisé en ce que toutes les pièces (9 - 4 - 10) d'immobilisation forment un S.

36. Elément formant dispositif d'étanchéité suivant l'une des revendications précédentes, caractérisé en ce que la pièce (4) intérieure d'immobilisation est réalisée en triangle.

37. Elément formant dispositif d'étanchéité suivant l'une des revendications 19 à 35, caractérisé en ce que la pièce intérieure d'immobilisation et/ou la pièce (6) d'étanchéité comportent un prolongement (21) pointu, déformable.

38. Elément formant dispositif d'étanchéité suivant l'une des revendications 19 à 36, caractérisé en ce qu'il est monté sur la pièce (4)extérieure d'immobilisation plusieurs pièces intérieures d'immobilisation, de préférence mobiles.

39. Fermeture de la zone d'introduction d'un manchon de câbles rétractable comportant au moins deux câbles, fabriquée suivant l'un des procédés des revendications 1 à 18, en utilisant un élément formant dispositif d'étanchéité suivant l'une des revendications 19 à 38, caractérisée en ce qu'elle est formée pendant l'opération de retrait en déformant la pièce (6) d'étanchéité contenue dans l'élément (1, 22) formant dispositif d'étanchéité et constituée d'un matériau déformable à chaud, les parois du manchon (2) de câble situées dans la partie de gousset comprise entre deux câbles (7) s'étendant au maximum tangentiellement, et en ce que des pièces d'immobilisation (3, 4, 23, 30, 31, 32) de l'élément (1, 22, 30 - 31 - 32) formant dispositif d'étanchéité sont disposées sur l'une des parois de manchon (2) de câbles dans la région d'introduction et/ou sur au moins un des câbles (7) introduits.

40. Elément formant dispositif d'étanchéité suivant l'une des revendications 19 à 38, caractérisé en ce que la pièce (4) intérieure d'immobilisation et/ou la pièce (6) d'étanchéité déposée comportent au moins un élargissement (35) latéral à leur extrémité libre.
